# EUROPEAN PATENT APPLICATION

(11) **EP 4 611 298 A1**
(43) Date of publication of application: **03.09.2025**
(21) Application number: 23920829.1
(22) Date of filing: 24.11.2023
(51) Int. Cl.: H04L 5/00

(54) **INDICATION INFORMATION SENDING METHOD AND APPARATUS, INDICATION INFORMATION RECEIVING METHOD AND APPARATUS, AND STORAGE MEDIUM**

(30) Priority: 10.02.2023 CN 202310158463
(71) Applicant: ZTE Corporation, Shenzhen, Guangdong 518057 (CN)
(72) Inventor: XIAO, Huahua, Shenzhen, Guangdong 518057 (CN); LU, Zhaohua, Shenzhen, Guangdong 518057 (CN); ZHENG, Guozeng, Shenzhen, Guangdong 518057 (CN); LI, Lun, Shenzhen, Guangdong 518057 (CN)
(74) Representative: Ziebig Hengelhaupt Intellectual Property Attorneys Patentanwaltskanzlei PartGmbB
(86) International application number: PCT/CN2023/134115
(87) International publication number: WO 2024/164638

(57) **Abstract**

Provided are an indication information sending method and apparatus, an indication information receiving method and apparatus, and a storage medium. The indication information sending method comprises: acquiring information processing mode indication information, wherein the information processing mode indication information is used for indicating an information processing mode, and the information processing mode indication information comprises first parameter information and/or an information processing mode identifier; and sending the information processing mode indication information.

## Description

The present disclosure claims a priority to Chinese Patent Application No. 202310158463. X, filed on February 10, 2023, the entire content of which is incorporated into the present application by reference.

### TECHNICAL FIELD

The present disclosure relates to the field of communication technologies, and in particular, to an indication information sending method and apparatus, an indication information receiving method and apparatus, and a storage medium.

### BACKGROUND

Through years of development, wireless communication systems have penetrated into every aspect of our lives and production, including transmissions of various videos and voices, positioning, and links and transmissions between massive machines. With the development of technologies, various technologies have been applied to wireless communication systems, such as multi-antenna technology, artificial intelligence, and so on.

### SUMMARY

In a first aspect, the embodiments of the present disclosure provide an indication information sending method. The method is applied to a first node, and includes:
acquiring information processing mode indication information, where the information processing mode indication information is used to indicate an information processing mode, where the information processing mode indication information includes first parameter information and/or an information processing mode identifier; and
sending the information processing mode indication information.

In a second aspect, the embodiments of the present disclosure provide an indication information receiving method. The method is applied to a second node, and includes:
receiving information processing mode indication information, where the information processing mode indication information is used to indicate an information processing mode, and the information processing mode indication information includes first parameter information and/or an information processing mode identifier.

In some embodiments, a value of the first parameter information is used to determine whether the information processing mode indication information includes the information processing mode identifier.

In some embodiments, the first parameter information takes a first value, and the information processing mode indication information includes the first parameter information and the information processing mode identifier.

In some embodiments, the first parameter information takes a second value or a third value, and the information processing mode indication information includes the first parameter information.

In some embodiments, the information processing mode indication information includes the information processing mode identifier, or the information processing mode indication information includes the first parameter information and the information processing identifier and the first parameter information takes a first value, and the information processing mode is a default information processing mode, or the information processing mode is an information processing mode indicated by the information processing mode identifier.

In some embodiments, the first parameter information takes the second value, and the information processing mode is a default information processing mode.

In some embodiments, the first parameter information takes the third value, and the information processing mode is a negotiated information processing mode.

In some embodiments, the information processing mode is determined according to relevant information of a first report, and the first report is a report including the information processing mode indication information.

In some embodiments, the relevant information of the first report is a number of bits of the first report, and determining the information processing mode according to the relevant information of the first report includes: in response that the number of bits of the first report is greater than or equal to a number of bits corresponding to a first processing result, determining that the information processing mode is an information processing mode indicated by the information processing mode identifier; or in response that the number of bits of the first report is less than a number of bits corresponding to a second processing result, determining that the information processing mode is a default information processing mode; and the first processing result is an information processing result obtained by processing information according to the information processing mode indicated by the information processing mode identifier.

In some embodiments, the method further includes: receiving an information processing result, where the information processing result is obtained by processing information according to the information processing mode indicated by the information processing mode indication information.

In some embodiments, the method further includes: sending reference signal resources on C0 slots respectively, where the reference signal resources respectively sent on the C0 slots are used by the first node to acquire C pieces of channel information of C slots.

In some embodiments, the C pieces of channel information of the C slots are C pieces of channel information of C slots with largest slot indexes among the C0 slots, and C0 is a positive integer greater than C; or the C pieces of channel information of the C slots are C pieces of channel information of C slots that are closest to a slot in which a report for sending the information processing result is located, among the C0 slots; and the first report is a report including the information processing mode indication information.

In some embodiments, the information processing result is obtained by processing C pieces of channel information of C slots according to a channel state information parameter and a default information processing mode.

In some embodiments, the channel state information parameter is acquired according to one of: acquiring the channel state information parameter according to a channel state information parameter configuration signaling; or acquiring the channel state information parameter according to a channel state information parameter determined by the first node.

In some embodiments, the information processing result is received on a first report, and the first report is a report including the information processing mode indication information.

In some embodiments, the second node is configured with C1 reports for receiving the information processing result, and receiving the information processing result includes: receiving the information processing result in a report with a smallest report index or a report with a smallest corresponding receiving slot, among the C1 reports.

In some embodiments, receiving the information processing mode indication information, includes: receiving the information processing mode indication information based on a PUCCH.

In some embodiments, receiving the information processing mode indication information based on the PUCCH, includes: receiving first request information on the PUCCH, where the first request information is used to associate the information processing mode indication information.

In some embodiments, after receiving the first request information on the PUCCH, the method further includes: sending PUCCH configuration information requested by the first request information; and receiving the information processing mode indication information and/or the information processing result on a PUCCH corresponding to the PUCCH configuration information.

In some embodiments, receiving the information processing mode indication information, includes: receiving the information processing mode indication information based on a PRACH.

In some embodiments, receiving the information processing mode indication information based on the PRACH, includes: determining an association relationship between a preamble of the PRACH and information processing mode indication information; and receiving the information processing mode indication information according to the association relationship between the preamble of the PRACH and the information processing mode indication information.

In some embodiments, receiving the information processing mode indication information, includes: receiving the information processing mode indication information based on at least one of a scrambling sequence, a check code, and an interleaving sequence.

In some embodiments, receiving the information processing mode indication information based on at least one of the scrambling sequence, the check code, and the interleaving sequence, includes: determining an association relationship between the scrambling sequence and the information processing mode indication information, and receiving the information processing mode indication information according to the association relationship between the scrambling sequence and the information processing mode indication information; or determining an association relationship between the check code and the information processing mode indication information, and receiving the information processing mode indication information according to the association relationship between the check code and the information processing mode indication information; or determining an association relationship between the interleaving sequence and the information processing mode indication information, and receiving the information processing mode indication information according to the association relationship between the interleaving sequence and the information processing mode indication information.

In a third aspect, the embodiments of the present disclosure provide a communication apparatus. The communication apparatus includes:
an acquiring unit, configured to acquire information processing mode indication information, where the information processing mode indication information is used to indicate an information processing mode, where the information processing mode indication information includes first parameter information and/or an information processing mode identifier; and
a sending unit, configured to send the information processing mode indication information.

In a fourth aspect, the embodiments of the present disclosure provide a communication apparatus. The communication apparatus includes:
a receiving unit, configured to receive information processing mode indication information, where the information processing mode indication information is used to indicate an information processing mode, where the information processing mode indication information includes first parameter information and/or an information processing mode identifier.

In a fifth aspect, the embodiments of the present disclosure provide a communication apparatus. The communication apparatus includes: a processor and a memory; the memory has stored instructions executable by the processor; the processor is configured to execute the instructions, so that the communication apparatus implements the method provided in any one of the first aspect or the second aspect above.

In a sixth aspect, the embodiments of the present disclosure provide a computer readable storage medium. The computer readable storage medium stores computer instructions, and the computer instructions, when executed on a computer, cause the computer to perform the method provided in any one of the first aspect or the second aspect above.

In a seventh aspect, the embodiments of the present disclosure provide a computer program product containing computer instructions, and the computer instructions, when executed on a computer, cause the computer to perform the method provided in any one of the first aspect or the second aspect above.

### BRIEF DESCRIPTION OF THE DRAWINGS

FIG. 1 is a schematic diagram of an architecture of a communication system according to some embodiments.
FIG. 2 is a flow chart of an indication information sending method according to some embodiments.
FIG. 3 is a flow chart of an indication information receiving method according to some embodiments.
FIG. 4 is a schematic diagram of components of a communication apparatus according to some embodiments.
FIG. 5 is a schematic diagram of components of another communication apparatus according to some embodiments.
FIG. 6 is a structural schematic diagram of a communication apparatus according to some embodiments.

### DETAILED DESCRIPTION

In order to enable those skilled in the art to better understand the technical solutions of the embodiments of the present disclosure, the technical solutions in the embodiments of the present disclosure will be described clearly and completely below in conjunction with the drawings in the embodiments of the present disclosure, and it is obvious that the described embodiments are only a part of the embodiments of the present disclosure, but not all of the embodiments. Based on the embodiments in the present disclosure, all other embodiments obtained by those ordinary skilled without creative efforts shall fall within the protection scope of the present disclosure.

It should be noted that all directional indications (such as upper, lower, left, right, front, back, etc.) in the embodiments of the present disclosure are only used to explain relative positional relationships, movements, etc., of various components under a specific posture (as shown in the drawings), and if the specific posture changes, the directional indications also change accordingly.

The terms "first" and "second", etc., are used for descriptive purposes only, but cannot be understood as indicating or implying relative importance or implicitly specifying the number of the indicated technical features. Thus, features defined with "first" or "second", etc., may explicitly or implicitly include one or more such features. In the description of the present disclosure, unless otherwise specified, "multiple / a/the plurality of" means two or more.

In the embodiments of the present disclosure, the words, such as "exemplary / exemplarily" or "for example", are used to represent an example, an illustration or an explanation. Any embodiment or design solution described with "exemplary / exemplarily" or "for example" in the embodiments of the present disclosure should not be construed as preferred or advantageous over other embodiments or design solutions. Rather, the usage of the words, such as "exemplary / exemplarily" or "for example", is intended to present relevant concepts in a detailed manner.

The technical solutions provided in the embodiments of the present disclosure may be applied to various mobile communication networks, for example, new radio (New Radio, NR) mobile communication networks using the fifth generation mobile communication technology (5th generation mobile networks, 5G), future mobile communication networks or multiple communication fusion systems, etc., which are not limited to the embodiments of the present disclosure.

The network architecture of the mobile communication network (including but not limited to 3G, 4G, 5G and future mobile communication networks) in the embodiments of the present disclosure may include a network side device (e.g., including but not limited to a base station) and a receiving side device (e.g., including but not limited to a terminal). Also, it should be understood that, in the embodiments of the present disclosure, a first node (also referred to as a first communication node device) may be a receiving side device, and a second node (also referred to as a second communication node device) may be a network side device, or the first node may be a network side device and the second node may be a receiving side device. Alternatively, in device-to-device communication, both the first node and the second node may be base stations or terminals.

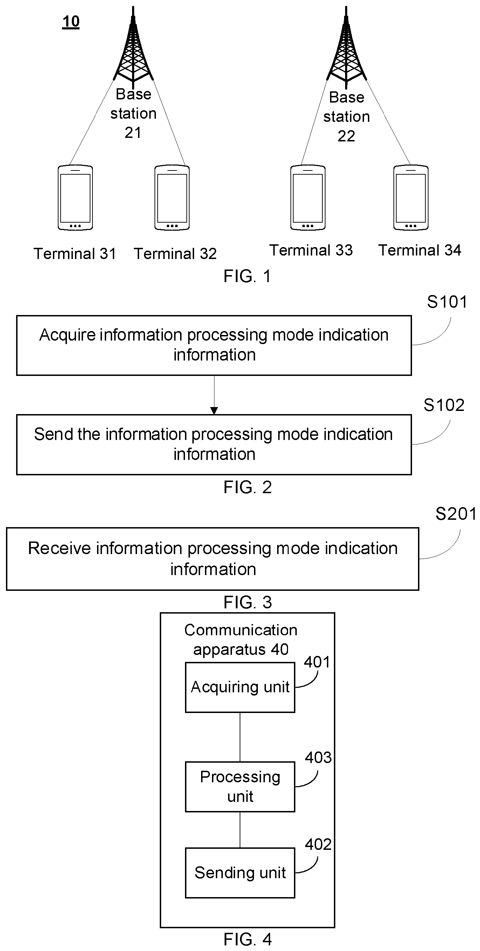

Exemplarily, the network side device as a base station and the receiving side device as a terminal are taken as an example, as shown in FIG. 1. FIG. 1 is a schematic diagram of an architecture of a communication system according to some embodiments. As shown in FIG. 1, a communication system 10 includes a plurality of base stations (e.g., base station 21 and base station 22) and a plurality of terminals (e.g., terminal 31, terminal 32, terminal 33, and terminal 34). The plurality of base stations and the plurality of terminals may be communicatively connected.

In some embodiments, the base station is used to provide radio access services to a plurality of terminals. For example, a base station provides a service coverage area (also referred to as a cell). A terminal entering the area may communicate with the base station by a wireless signal, to receive a radio access service provided by the base station. The service coverage areas of base station 21 and base station 22 may overlap, and a terminal in an overlapped area may receive wireless signals from the plurality of base stations.

In some embodiments, a base station may be connected to a plurality of terminal devices (e.g., base station 21 is connected to terminal 31 and terminal 32). Terminal 31 and terminal 32 may be located in a same cell, or terminal 31 and terminal 32 may also be located in different cells. That is, a base station may provide network services to terminals in a cell, and may also provide network services to terminals in a plurality of cells at the same time.

In some embodiments, a base station may be a base station or an evolutional base station (evolutional node B, eNB or eNodeB) in long term evolution (LTE), long term evolution advanced (LTEA), a base station device in a 5G network, or a base station in a future communication system, etc. The base station may include various macro base stations, micro base stations, home base stations, wireless remote devices, reconfigurable intelligent surfaces (RISs), routers, wireless fidelity (WIFI) devices, or various network side devices in a primary cell and a secondary cell, etc.

In some embodiments, the terminal may be a device with a wireless transceiver function, and the terminal may be deployed on land (including indoors or outdoors, handheld, worn or in-vehicle); may also be deployed on the water (e.g., on a ship, etc); may also be deployed in the air (e.g., on an airplane, a balloon and a satellite, etc.). The terminal may be a mobile phone, a pad, a computer with a wireless transceiver function, a virtual reality (Virtual Reality, VR) terminal, an augmented reality (Augmented Reality, AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit the application scenarios. The terminal sometimes may also be referred to as a user, a user equipment (User Equipment, UE), an access terminal, a UE unit, a UE station, a mobile station, a mobile platform, a remote station, a remote terminal, a mobile device, a UE terminal, a wireless communication device, a UE agent, or a UE apparatus, etc., which is not limited to the embodiments of the present disclosure.

In some embodiments, an indicator/indication of a parameter may also be referred to as an index or an identifier (ID), and concepts of indicator/indication, identifier and index are equivalent. For example, a resource identifier of a wireless system may also be referred to as a resource indication or a resource index. The resource identifier of the wireless system includes but is not limited to one of: an identifier corresponding to a reference signal resource, a reference signal resource group, a reference signal resource configuration, a channel state information (Channel State Information, CSI) report, a CSI report set, a terminal, a base station, a panel, a neural network, a sub-neural network, a neural network layer, etc. The base station may indicate an identifier of a resource or a group of resources to the terminal by various higher layer signalings and/or physical layer signalings. The terminal may feed back an identifier of a resource or a group of resources to the base station by various higher layer signalings and/or physical layer signalings.

In some embodiments, the higher layer signaling includes but is not limited to radio resource control (Radio Resource Control, RRC), media access control control element (Media Access Control Control Element, MAC CE), and other signalings other than the physical layer signaling, such as an LPP (LTE Positioning Protocol) higher layer signaling, an NRPPa (NR Positioning Protocol A) higher layer signaling, LPPa (LTE Positioning Protocol A) higher layer signaling, and LPP is also applied to an NR positioning protocol. The physical layer signaling may also be transmitted between the base station and the terminal (for example, the base station and the terminal transmit the physical layer signaling on a physical downlink control channel (Physical Downlink Control Channel, PDCCH) or transmit the physical layer signaling on a physical uplink control channel (Physical Uplink Control Channel, PUCCH)).

In some embodiments, a slot may be a slot or a mini slot. A slot or mini slot includes at least one symbol. The symbol refers to a time unit in a subframe, frame or slot, for example, the symbol may be an orthogonal frequency division multiplexing (OFDM) symbol, a single-carrier frequency division multiple access (SC-FDMA) symbol, or an orthogonal frequency division multiple access (OFDMA) symbol.

In some embodiments, a beam includes a transmitting beam, a receiving beam, a pair of receiving beam and transmitting beam, a pair of transmitting beam and receiving beam. In some embodiments, the beam may be understood as a resource, such as a reference signal resource, a transmitting end spatial filter, a receiving end spatial filter, a spatial filter, a spatial receiving parameter, transmitting end precoding, receiving end precoding, an antenna port, an antenna weight vector, an antenna weight matrix, etc. A beam index may be replaced by a resource index (such as a reference signal resource index), because the beam may be bound with some time-frequency code resources for transmissions. The beam may also be a transmission (sending/receiving) mode; the transmission mode may include spatial division multiplexing, frequency domain/time domain diversity, beamforming, etc. In addition, the base station may perform a quasi co-location (Quasi Co-location, QCL) configuration for two reference signals and inform a user end to describe a channel characteristic hypothesis. Parameters involved in the quasi co-location include at least: Doppler spread, Doppler shift, delay spread, average delay, average gain and spatial parameter (Spatial Rx parameter, or Spatial parameter); the spatial parameter may include a spatial receiving parameter, angle information, spatial correlation of the receiving beam, average delay, and correlation of time-frequency channel responses (including phase information). The angle information may include at least one of: angle of arrival (angle of Arrival, AOA), angle of departure (angle of Departure, AOD), zenith angle of departure (Zenith angle of Departure, ZOD), and zenith angle of arrival (Zenith angle of Arrival, ZOA). The spatial domain filtering may be at least one of: a DFT vector, a precoding vector, a DFT matrix, a precoding matrix, a vector constituted by a linear combination of a plurality of DFTs, and a vector constituted by a linear combination of a plurality of precoding vectors. In some embodiments, concepts of a vector and a vector quantity are interchangeable. In some embodiments, a beam pair includes a combination of a transmitting beam and a receiving beam.

In some embodiments, the beam direction or beam angle may include at least one of: angle of arrival (Angle of Arrival, AOA), angle of departure (Angle of Departure, AOD), zenith angle of departure (Zenith angle of Departure, ZOD), zenith angle of arrival (Zenith angle of Arrival, ZOA), a vector or vector index constructed by at least one angle of AOA, AOD, ZOD, and ZOA, a discrete Fourier transformation (Discrete Fourier Transformation, DFT) vector, a codeword in a codebook, a transmitting beam index, a receiving beam index, a transmitting beam group index, and a receiving beam group index.

In some embodiments, in order to calculate channel state information or perform channel estimation, mobility management, positioning, etc., a base station or a user needs to send a reference signal (RS). The reference signal includes, but is not limited to, a channel state information-reference signal (CSI-RS), a channel state information-interference measurement signal (channel state information-interference measurement, CSI-IM), a sounding reference signal (SRS), a synchronization signal block (SSB), and a physical broadcast channel (PBCH). Exemplarily, the CSI-RS includes the following types: a zero power CSI-RS (ZP CSI-RS) and a non-zero power CSI-RS (NZP CSI-RS). The NZP CSI-RS may be used to measure a channel or interference. The CSI-RS may also be used for tracking, which is referred to as a CSI-RS for tracking (CSI-RS for Tracking, TRS). The CSI-IM is generally used to measure interference. The SRS is used for channel estimation. In addition, a set of resource elements (REs) included in a time-frequency resource used for transmitting a reference signal is referred to as a reference signal resource, for example, CSI-RS resource, SRS resource, CSI-IM resource, and SSB resource. In this document, the SSB includes a synchronization signal block and/or a physical broadcast channel.

In some embodiments, a resource for transmitting a reference signal may be referred to as a reference signal resource. In order to save signaling overhead, etc., a plurality of reference signal resources may be divided into a plurality of sets (for example, CSI-RS resource set, CSI-IM resource set, SRS resource set). The reference signal resource set includes at least one reference signal resource, and a plurality of reference signal resource sets may all come from a same reference signal resource configuration (for example, a CSI-RS resource setting, an SRS resource setting, a CSI-RS resource setting, a CSI-IM resource setting may be merged with a CSI-IM resource setting, all referred to as a CSI-RS resource setting), to configure parameter information.

In some embodiments, the base station configures reference signal measurement resource information, and the reference signal measurement resource information is used to acquire channel state information. The reference signal measurement resource information includes at least one piece of channel measurement resource (Channel Measurement Resource, CMR) information and at least one piece of interference measurement resource (Interference Measurement Resource, IMR) information. The base station configures the reference signal measurement resource information in a report configuration (report config) or a reporting setting. In some examples, a piece of channel measurement resource information includes at least one channel reference signal resource setting, such as at least one CSI-RS resource setting or at least one SRS resource setting. A piece of interference measurement resource information includes at least one interference reference signal resource setting, such as at least one CSI-IM resource setting. In some examples, a piece of channel measurement resource information includes at least one channel reference signal resource set, such as at least one CSI-RS resource set or at least one SRS resource set, and a piece of interference measurement resource information includes at least one interference reference signal resource set, such as at least one CSI-IM resource set. In some examples, a piece of channel measurement resource information includes at least one channel reference signal resource, such as at least one CSI-RS resource or at least one SRS resource, and a piece of interference measurement resource information includes at least one interference reference signal resource, such as at least one CSI-IM resource.

In some embodiments, in order to better transmit data or signals, the base station or terminal needs to acquire a measurement parameter or an information processing result, and the measurement parameter or the information processing result may include channel state information or other parameters used to characterize a channel. The channel state information may include at least one of: a channel state information-reference signal resource indicator (CSI-RS Resource Indicator, CRI), a synchronization signal block resource indicator (Synchronization Signals Block Resource Indicator, SSBRI), layer 1 reference signal received power (L1 Reference Signal Received Power, L1-RSRP or RSRP), differential RSRP (Differential RSRP); layer 1 signal-to-interference noise ratio (L1 Signal-to-Interference Noise Ratio, L1-SINR or SINR), differential L1-SINR (Differential L1-SINR); reference signal received quality (Reference Signal Received Quality, RSRQ), a channel quality indicator (Channel Quality Indicator, CQI), a precoding matrix indicator (Precoding Matrix Indicator, PMI), a layer indicator (Layer Indicator, LI), a rank indicator (Rank Indicator, RI), precoding information. The precoding information includes first-type precoding information, such as codebook-based precoding information. The precoding matrix indicator is one type of the codebook-based precoding information. The precoding information further includes a non-codebook-based implementation, for example, second-type precoding information.

In some embodiments, the terminal and the base station transmit channel state information matched with the channel, by the first-type precoding information, and the first-type precoding information is precoding information constituted based on a traditional channel characteristic matrix or a quantized value of a characteristic matrix, for example, a codebook-based method, such as an N-antenna codebook in LTE (herein N=2, 4, 8, 12, 16, 24, 32), type I codebook, type II codebook, type II port selection codebook, enhanced type II codebook, enhanced type II selection codebook, and further enhanced type II selection codebook in NR.

The above-mentioned codebook includes L codewords. The main principle of the codebook is that a base station and a terminal store L codewords in advance according to a specified formula or table or dictionary. In some examples, the codeword is a vector. In some examples, the codeword is a matrix. The matrix consists of r columns, each column of which is also a vector. In some examples, each column of the matrix is orthogonal to each other. In some examples, the vector constituting the codeword is a 0-1 vector, where only a value in the entire vector is 1 and the other values are zeros. In some examples, the vector constituting the codeword is a DFT vector. In some examples, the vector constituting the codeword is obtained by performing Kronecker (kronecker) product for two or more DFT vectors. In some examples, the vector constituting the codeword is obtained by two or more DFT vectors multiplied by different phases with rotation and connection. In some examples, the vector constituting the codeword is obtained by performing Kronecker product for two or more DFT vectors and multiplying by a phase with rotation.

In some embodiments, the terminal and the base station transmit channel state information matched with the channel, by the second-type precoding information, and the second-type precoding information is to obtain the channel state information based on a model, such as to obtain the channel state information by artificial intelligence. In an example, the base station and the terminal obtain the channel state information by an encoder of an autoencoder, the autoencoder includes an encoder and a decoder, the encoder is in the terminal and the decoder is in the base station. The terminal compresses an obtained channel H by the encoder to obtain a compressed H1, and quantizes the compressed channel H1 and feeds the quantized channel H1 back to the base station; the base station receives the quantized H1, de-quantizes the quantized H1 and inputs the de-quantized H1 into the decoder, and uses the decoder to decompress the de-quantized H1, to restore H. In an example, the H includes K0 elements, the terminal selects K elements from the H as H1, quantizes the H1 and feeds back the quantized H1. The base station receives the K quantized elements and de-quantizes the K quantized elements, inputs the de-quantized K elements into the model, and uses the model to output K0 elements as the recovery for H, thereby obtaining a precoding matrix of H. K and K0 are integers greater than 1, and K<K0. Herein, H1 obtained by the compressor or the K elements selected from H are all second-type precoding information. Also, for the sake of simplicity, the quantized H1 is also referred to as the second-type precoding information. In an example, the second-type precoding information may also be a precoding matrix that is generated by other non-model modes and different from the first-type precoding information. In an example, the second-type precoding information may also be a precoding matrix other than the first-type precoding information.

In some embodiments, beam parameter information is layer 1 reference signal received power (L1 Reference Signal Received Power, L1-RSRP or RSRP), differential RSRP, corresponding to at least one beam; in some embodiments, the beam parameter information is layer 1 signal-to-interference noise ratio (L1 Signal-to-Interference Noise Ratio, L1-SINR or SINR), differential SINR, corresponding to at least one beam; in some embodiments, the beam parameter information is the reference signal received quality (Reference Signal Received Quality, RSRQ) corresponding to at least one beam; in some embodiments, the beam parameter information is a beam angle (at least one of AOA, ZOA, AOD, ZOD, etc., sometimes also referred to as horizontal angle of arrival, vertical angle of arrival, horizontal angle of departure, and vertical angle of departure, respectively) corresponding to at least one beam; in some embodiments, the beam parameter information is a transmitting beam index corresponding to at least one beam; in some embodiments, the beam parameter information is a receiving beam index corresponding to at least one beam; in some embodiments, the beam parameter information is an index of a pair of transmitting beam and receiving beam (referred to as a beam pair index or beam pair, for short) corresponding to at least one beam; in some embodiments, the beam parameter information is a beam domain receive power map (Beam Domain Receive Power Map, BDRPM) corresponding to at least one beam; in some embodiments, the beam parameter information is a channel state information reference signal resource indicator (CSI-RS Resource Indicator, CRI) corresponding to at least one beam; in some embodiments, the beam parameter information is a synchronization signal block resource indicator (Synchronization Signals Block Resource Indicator, SSBRI) or other reference signal resource indicators corresponding to at least one beam, such as a sounding reference signal resource indicator (SRSRI). In some embodiments, the beam parameter information is a combination of at least two of the following beam parameter information corresponding to at least one beam: RSRP, RSRQ, SINR, beam angle, transmitting beam index, receiving beam index, beam pair index, CRI, SSBRI, etc. In some embodiments, the beam parameter information is a linear value of one of RSRP, RSRQ, and SINR. In some embodiments, the beam parameter information is a logarithmic value or a decibel (DB) value of one of RSRP, RSRQ, and SINR.

In some embodiments, the beam parameter information is obtained based on a CSI-RS measurement. In some embodiments, the beam parameter information is obtained based on an SSB measurement. In some embodiments, the beam parameter information is obtained based on an SRS measurement.

In some embodiments, a communication node will select an information processing mode to process the obtained information (e.g., channel information, channel matrix information, time domain channel information, frequency domain channel information, angle information, position information), to obtain an information processing result (referred to as a processing result for short). The processing result includes one or more pieces of the channel state information, or one or more pieces of the beam parameter information, or angle information, position information (e.g., coordinates), and position parameter information.

In some embodiments, the position parameter information includes but is not limited to at least one of: reference signal time difference (Reference Signal Time Difference, RSTD), relative time of arrival (Relative Time of Arrival, RTOA), angle of arrival (Angle of Arrival, AOA), angle of departure (Angle of Departure, AOD), receiving-transmitting time difference (Rx-Tx time difference), transmitting-receiving time difference (Tx-Rx time difference), reference signal received power (Reference Signal Received Power), and multi-path information, where the Rx-Tx time difference includes an Rx-Tx time difference at a base station side (gNB Rx-Tx time difference) and an Rx-Tx time difference at a terminal side (UE Rx-Tx time difference). When the angle information includes an azimuth angle and a pitch angle, the angle of arrival includes a zenith angle of arrival (Zenith angle of Arrival, ZOA) and an azimuth angle of arrival (Azimuth angle of Departure, AOD), the angle of departure includes a zenith angle of departure (Zenith angle of Departure, ZOD) and an azimuth angle of departure (Azimuth angle of Departure, AOA), and a number of paths is added, the relative delay of the path is added, the power of the multi-path is added, the time domain response of the multi-path is added, and a real part and an imaginary part of the time domain response of the multi-path are added.

In some embodiments, the above information processing mode may be a traditional information processing mode or various advanced information processing modes. The advanced information processing modes include but are not limited to an information processing mode based on artificial intelligence (Artificial Intelligence, Al). Al is a device or component with a self-learning capability, and may be implemented by software, module, model, etc. AI may include the following types: machine learning (Machine learning, ML), deep learning, reinforcement learning, transfer learning, deep reinforcement learning, and meta learning, etc. In some examples, the information processing mode is implemented by an artificial intelligence network (also referred to as a neural network, or a neural network model, or a model).

The neural network model includes a neural network model structure and a neural network model parameter. The neural network model structure includes a plurality of layers, each layer of which includes at least one node. In some examples, the neural network includes an input layer, an output layer, and at least one hidden layer. Each layer of the neural network includes but is not limited to using at least one of a fully connected layer, a dense layer, a convolutional layer, a transposed convolutional layer, a direct connection layer, an activation function, a normalization layer, a pooling layer, etc. In some examples, each layer of the neural network may include a sub-neural network, such as a residual block (Residual Network block, or Resnet block), a dense network (Densenet Block), a recurrent network (Recurrent Neural Network, RNN), etc. The neural network model may be referred to as a network model or a model for short, and the neural network parameter may be referred to as a network parameter for short. A network model structure defines an architecture of the network, such as a number of layers of the neural network, a size of each layer, an activation function, a connection situation, a size of a convolution kernel and a convolution step, a convolution type (e.g., 1D (dimension) convolution, 2D convolution, 3D convolution, hollow convolution, transposed convolution, separable convolution, group convolution, extended convolution, etc.), and the network parameter is a weight value and/or biases and their values of each network layer in the network model. A network model structure may correspond to a plurality of different sets of neural network parameter values, to adapt to different scenarios. The parameters of the neural network may be obtained by online training or offline training. For example, the neural network model is trained to obtain the neural network parameters, by inputting at least one sample and label.

In some embodiments, the model means that a data flow between an original input of samples and an output target goes through a plurality of linear components or non-linear components. The model mentioned includes a neural network model, and a functional component or function that maps input information to output information (the mapping herein includes linear mapping and non-linear mapping). In some embodiments, each model corresponds to a model indication (Model Indicator, Model ID) or a model identifier (model Identity, Model ID). In some embodiments, the model identifier may also have one of the following other equivalent names or concepts: model index, function identifier, model indication, functional module identifier, etc.

In some examples, the model includes a model structure and model parameters. For example, the model is a neural network model, and the neural network model includes a neural network model structure (Model structure) and neural network model parameters (Model parameters), which are respectively used to describe a structure of the neural network and parameter values of the neural network. A neural network model structure may correspond to a plurality of neural network model parameters, i.e., the neural network model structure may be the same, but the corresponding neural network model parameter values may be different.

In some embodiments, an information processing mode corresponds to a model, for example, information is processed by a model, and different models correspond to different information processing modes. In some embodiments, a model identifier may also be referred to as an information processing mode identifier, or a model identifier corresponds to or is associated with an information processing mode identifier. In some examples, for an information processing mode implemented based on a traditional mode, its information processing mode identifier is a default specific value (e.g., 0), a fixed negative value, or a value other than a value range of the information processing mode identifier.

In some embodiments, the model may be an autoencoder-based neural network model. The autoencoder includes an encoder and a decoder. As an example, the encoder is located at the terminal and the decoder is located at the base station.

In some embodiments, the information processing mode identifier corresponding to the information processing mode may be represented by a model identifier corresponding to a model on which the information processing mode is based.

In some embodiments, the information processing mode identifier includes a first identifier and a second identifier, the first identifier is used to indicate scene information, and the second identifier is used to indicate an information processing mode in the scene indicated by the first identifier.

In some other embodiments, the information processing mode identifier may include a third identifier, and the third identifier is used to indicate the information processing mode.

In some embodiments, the information processing mode may be global. For example, different information processing mode identifiers may be uniformly numbered. In some embodiments, the information processing mode identifier may be a local information processing mode (e.g., a type of function (such as CSI acquisition, CSI prediction, positioning, beam spatial domain prediction, beam time domain prediction, channel estimation, encoding, demodulation, etc.)).

In some embodiments, the information processing mode identifier is associated with at least one of: a function of the information processing mode, a network identifier, a cell identifier, a sector identifier, a precoding index, a port group index, an information processing type, a channel type, a reference signal resource identifier, a reference signal resource set identifier, and a reference signal type.

In some embodiments, the information processing mode identifier is absolute. For example, a maximum value of the information processing mode identifier is A, where A is a positive integer greater than 1. In this case, the information processing mode identifier transmitted in the higher layer signaling or physical layer signaling may be any one of values from 1 to A.

In some embodiments, the information processing mode identifier is relative. For example, a maximum value of the information processing mode identifier is A. In this way, the A information processing mode identifiers and the related parameter descriptions are configured by an RRC signaling. MAC CE is used to select and activate B information processing modes from the A information processing modes, where B is a positive integer less than A. Afterward, C information processing mode identifiers are transmitted by a physical layer signaling, where the above-mentioned C information processing modes belong to the activated B information processing modes, and C is a positive integer less than B. In the RRC signaling, A information processing mode identifiers are from 1 to A (or from 0 to A-1). In the MAC CE, the activated B information processing mode identifiers may be renumbered from 1 to B (or 0 to B-1). In the physical layer signaling, the C information processing mode identifiers may be renumbered from 1 to C (or 0 to C-1). It may be understood that, in the MAC CE or physical layer signaling, the information processing mode identifier is a relative identifier.

In some embodiments, in order to transmit the information processing result (or referred to as a processing result, for short), such as one or more pieces of channel state information, one or more of beam measurement parameters, position information, time information, angle information, etc, for example, the terminal feeds back the information processing result, and the base station receives the information processing result. The terminal and the base station need to define a report (such as a CSI report or a CSI report config). The CSI report at least defines one of the following parameters: a time-frequency resource for feeding back CSI, a content (e.g., report quantity) included in the CSI, a time domain category of CSI feedback, a measurement channel resource, a measurement interference resource, a measured bandwidth size, and other information.

The CSI report may be transmitted on an uplink transmission resource, and the uplink transmission resource includes a physical uplink shared channel (PUSCH) and a PUCCH.

The CSI report has time domain characteristics, including periodic CSI report (P-CSI), aperiodic CSI report (AP-CSI), and semi-persistent CSI report (SP-CSI). Generally speaking, a number of bits transmitted by the P-CSI is relatively small and is transmitted on the PUCCH; a number of bits transmitted by the A-CSI is relatively large and is generally transmitted on the PUSCH; the SP-CSI may be transmitted based on the PUSCH or the PUCCH. The P-CSI transmitted based on the PUCCH is generally configured by a higher layer signaling (Radio Resource Control, RRC); the SP-CSI transmitted based on the PUCCH is also configured or activated by a higher layer signaling (RRC and/or MAC CE); the SP-CSI or A-CSI transmitted based on the PUSCH are triggered by a physical layer signaling (e.g., Downlink Control Information, DCI). The DCI is generally transmitted on a physical downlink control channel (PDCCH).

In some embodiments, channel information is information that is obtained according to a reference signal (e.g., CSI-RS) and used for describing channel environment between communication nodes, such as a time domain channel matrix, a frequency domain channel matrix, channel state information and angle information (including an azimuth angle and a pitch angle, angle of departure or angle of arrival) corresponding to the time domain channel matrix or the frequency domain channel matrix. In some examples, the time domain channel matrix and the frequency domain channel matrix are complex matrices, which are related to a number Nt of transmitting antennas, a number Nr of receiving antennas, and a resource element (RE). For example, there is at least one Nr × Nt channel matrix on a physical resource block. The base station transmits reference signals for channel measurement in N slots. The terminal measures, in at least one slot, the received reference signals for channel measurement transmitted in the N slots respectively. Channel information Hi of the corresponding slots is obtained respectively according to the received reference signals for channel measurement transmitted in the N slots, where i=1, ···, N.

The indication information sending method and the indication information receiving method provided by the embodiments of the present disclosure are applicable to a communication system including at least one first node and at least one second node. The following takes the first node as a terminal and the second node as a base station as an example, to introduce the indication information sending method and the indication information receiving method provided by the embodiments of the present disclosure.

As shown in FIG. 2, the embodiments of the present disclosure provide an indication information sending method, the method is applied to a first node and the method includes the following contents.

S101, acquire information processing mode indication information.

The information processing mode indication information is used for an information processing mode.

In some embodiments, the information processing mode indication information includes first parameter information and/or an information processing mode identifier. As an example, the information processing mode identifier indicated by the information processing mode indication information may be one or more.

In some embodiments, a value of the first parameter information is used to determine whether the information processing mode indication information includes an information processing mode parameter identifier. As an example, in a case where the first parameter information takes a first value, the information processing mode indication information includes the first parameter information and the information processing mode identifier. As an example, in a case where the first parameter information takes a second value or a third value, the information processing mode indication information only includes the first parameter information.

Exemplarily, the first parameter information may be implemented with 2 bits, and a value range of the first parameter information is {00, 01, 10, 11}, so the first parameter information may take a first value, a second value or a third value, and the first value, the second value and the third value may be different values in the value range of the first parameter information.

Exemplarily, the first parameter information may be implemented with 1 bit, and a value range of the first parameter information is {0, 1}, so the first parameter information may take a first value or a second value, and the first value and the second value may be different values in the value range of the first parameter information.

In some embodiments, the information processing mode indicated by the information processing mode indication information may include a default information processing mode, a negotiated information processing mode, or an information processing mode indicated by the information processing mode identifier.

As an example, the default information processing mode (in some examples or embodiments, the default information processing mode is also referred to as a second information processing mode) may be a traditional information processing mode (or a non-model-based information processing mode) (for example, channel state information based on a first-type codebook, interpolation-based channel estimation, traversal-based beam scanning, traditional positioning algorithm, etc.). In some examples, the default information processing mode may also have an information processing mode identifier, such as a fixed value, 0, a negative value, or a value other than a value range of a model-based information processing mode identifier.

As an example, the negotiated information processing mode (in some examples or embodiments, the negotiated information processing mode is also referred to as a first information processing mode based on a first model) may be an original information processing mode, or a negotiation/preconfiguration-based information processing mode. For example, the negotiated information processing mode may be an information processing mode based on a historical model or current model, or a corresponding information processing mode based on a default model, or an information processing mode based on a preconfigured model, which is not limited thereto.

In some embodiments, the first node may itself determine that the original information processing mode is not applicable to the current channel environment by a direct measurement or an indirect measurement, thereby acquiring the information processing mode indication information.

In some other embodiments, the second node may determine that the original information processing mode is not applicable to the current channel environment by a direct measurement or an indirect measurement, and then trigger, by means of the higher layer signaling and/or physical layer signaling, the first node to acquire the information processing mode indication information.

For example, the second node sends a reference signal, for example, sends a reference signal based on a CSI-RS resource, or a plurality of CSI-RS resources in a CSI-RS resource set. The first node receives the reference signal and acquires channel matrix information. In a period of time, the first node processes the channel matrix information in a negotiated information processing mode, to obtain second-type precoding information. However, as the position of the first node changes (e.g., the first node moves or rotates), or the surrounding environment changes, the channel environment changes. The first node finds that the current information processing mode is not applicable to the changed channel environment by the direct measurement or indirect measurement. In this case, the first node may determine a new information processing mode applicable to the changed channel environment by the direct measurement or indirect measurement. In order to ensure processing performance of the channel information, the first node may feed back the information processing mode indication information.

For example, the communication nodes determine an information processing mode corresponding to an information processing mode identifier by a higher layer signaling and/or a physical layer signaling, and use the information processing mode to process channel information within a certain period of time. However, as the position of the first node changes (e.g., the first node moves or rotates), or the surrounding environment changes, the channel environment changes. The first node finds that the current first information processing mode is not applicable to the channel environment in which the first node is located (for example, finds that the packet error ratio is relatively high), by the direct measurement or indirect measurement. A new information processing mode applicable to the current scenario is found by the direct measurement or indirect measurement, and indication information of the information processing mode is sent to the second node.

For example, the first node performs beam prediction by using the current information processing mode, and feeds back a corresponding beam prediction result. The beam prediction may include a time domain beam prediction and/or a spatial domain beam prediction. Exemplarily, the beam prediction result includes at least one of: predicted L1-RSRP, predicted L1-SINR, indexes corresponding to K optimal beams, reference resource indexes (e.g., CRI, SSBRI) corresponding to K beams, L1-RSRP corresponding to K optimal beams, L1-SINR corresponding to K optimal beams, and probabilities corresponding to K optimal beams, where K is an integer greater than or equal to 1. However, as the position of the first node changes (e.g., the first node moves or rotates), or the surrounding environment changes, the channel environment changes. The first node finds that the original first information processing mode is not applicable to the current channel environment, so the first node determines a new information processing mode applicable to the current channel environment by the direct measurement or indirect measurement. The first node may perform beam prediction by using the new information processing mode. In an example, the first node may feed back a beam prediction result based on the new information processing mode. In an example, the first node may feed back a beam prediction result and information processing mode indication information based on the new information processing mode. In an example, the first node may feed back a result of the direct measurement. In an example, the first node may feed back a result of the direct measurement and the information processing mode indication information. Exemplarily, the result of the direct measurement mentioned above may be one or more of directly measured L1-RSRP or L1-SINR, such as largest one or more of L1-RSRPs, or one or more of L1-SINRs, or CRI/SSBRI corresponding to the largest one or more of L1-RSRPs, or CRI/SSBRI corresponding to the largest one or more of L1-SINR.

S102, send the information processing mode indication information.

In some embodiments, the first node may transmit the information processing mode indication information in an explicit mode or an implicit mode. As an example, transmitting the information processing mode indication information in the explicit mode may be understood as that the first node directly transmits all or a part of the content of the information processing mode indication information to the second node. As an example, transmitting the information processing mode indication information in the implicit mode may be understood as that the first node transmits other information associated with the information processing mode indication information to the second node, so that the second node obtains the information processing mode indication information according to the other information associated with the information processing mode indication information.

A transmitting mode of the information processing mode indication information is introduced exemplarily below.
1. Send the information processing mode indication information based on a first report.

In some embodiments, the first node sends the information processing mode indication information based on a first report. Correspondingly, the second node receives the information processing mode indication information based on the first report. The first report is a report including the information processing mode indication information.

As an example, the first report may be a channel state information report. Exemplarily, the first report may be a periodic, aperiodic or semi-persistent channel state information report. The first report may be transmitted on a transmission resource corresponding to the channel state information report. Exemplarily, the transmission resource corresponding to the channel state information report may be a physical control channel or a physical service channel corresponding to the channel state information report.

In some embodiments, the first report may include at least one of a first field, a second field, and a third field. The first field is used to carry the first parameter information. The first report may also report the second field, and the second field is used to carry the information processing mode identifier. The first report may further include the third field, and the third field is used to carry the information processing result.

Exemplarily, taking the first report as a periodic channel state information report as an example, the first report may include the first field and the third field. In some embodiments, the first report includes the second field. Whether the first report includes the second field depends on a value of the first field.

Exemplarily, taking the first report as an aperiodic channel state information report or a semi-persistent channel state information report as an example, the first report may include the third field. In some embodiments, the first report includes the second field. In a case where the first report does not include the second field, the information processing mode may be determined to be the default information processing mode or the negotiated information processing mode.

In some embodiments, the information processing mode may be determined according to relevant information of the first report. For example, the relevant information of the first report is a number of bits of the first report. Determining the information processing mode according to the relevant information of the first report may be implemented as, for example: in a case where the number of bits of the first report is greater than or equal to a number of bits corresponding to a first processing result, determining that the information processing mode is an information processing mode indicated by the information processing mode identifier; or, in a case where the number of bits of the first report is less than a number of bits corresponding to a first processing result, determining that the information processing mode is a default information processing mode; and the first processing result is an information processing result obtained by processing information according to the information processing mode indicated by the information processing mode identifier. Herein, the number of bits of the first report may be a number of transmission bits or a capacity of a transmission resource corresponding to the first report, or the number of valid transmission bits of a transmission resource corresponding to the first report.

In some embodiments, a content carried by the third field in the first report may be determined according to the number of bits of the first report. For example, in a case where the number of bits of the first report is greater than or equal to the number of bits corresponding to the first processing result, the third field includes the first processing result; or, in a case where the number of bits of the first report is less than the number of bits corresponding to the first processing result, the third field includes the information processing result obtained by processing the information based on the default information processing mode or negotiated information processing mode.

A first node includes a plurality of encoders, to adapt to different scenarios. The plurality of encoders correspond to a same decoder located at the second node. After the first node switches the encoder, the first node sends a model identifier or an information processing mode identifier corresponding to the encoder to the second node by the first report. The second node determines subsequent operations (for example, transmitting a sub-set of encoders applicable to the first node (for example, the model identifier or the information processing mode identifier)) according to the model identifier received from the first node. In some embodiments, a model includes two sub-models, which are located at the first node and the second node, respectively. Each of the two sub-models has a sub-model identifier or a sub-information processing mode identifier. The communication nodes transmit the sub-model identifier or the sub-information processing mode identifier. For simplicity of description, the sub-model identifier and the sub-information processing mode identifier are also collectively referred to as an information processing mode identifier.

In some embodiments, the first node may process information according to the information processing mode indicated by the information processing mode indication information, to obtain an information processing result, and send the information processing result.

In some embodiments, before the first node processes channel information according to the information processing mode indicated by the information processing mode indication information to obtain the information processing result, the first node acquires C pieces of channel information of C slots. C is a positive integer.

As an example, acquiring the C pieces of channel information of C slots may be, for example, implemented as: acquiring C0 pieces of channel information of C0 slots, and selecting C pieces of channel information of C slots with largest slot indexes among the C0 slots; or acquiring C0 pieces of channel information of C0 slots, and selecting C pieces of channel information of C slots that are closest to a slot in which a first report is located, among the C0 slots; the first report is a report including the information processing mode indication information, and C0 is a positive integer greater than C.

In some embodiments, in a case where the first node acquires the C pieces of channel information of C slots, the first node processes the information according to the information processing mode indicated by the information processing mode indication information, to obtain an information processing result. For example, it may be implemented as: processing the C pieces of channel information of the C slots according to the obtained channel state information parameter and the default information processing mode, to obtain the information processing result. Acquiring the channel state information parameter according to one of the following operations: acquiring the channel state information parameter according to a received channel state information parameter configuration signaling; or acquiring the channel state information parameter according to a channel state information parameter determined by the first node. The channel state information parameter is a parameter used to configure and generate a codebook (e.g., a number of sub-bands, a number of beams, a number of coefficients corresponding to a beam, a number of bits of a quantized coefficient amplitude corresponding to a beam, a number of bits of a quantized phase, a number of layers of a codebook, a number of coefficients of a frequency domain vector, a number of bits of a coefficient amplitude and phase of a frequency domain vector, etc.), including but not limited to at least one of: codebook subset restriction (n1-n2-codebookSubsetRestriction-r16, N1, N2, O1, O2), a number of layers of a codebook, a type of a codebook (e.g., type I codebook, typell codebook, etypeII codebook, FetypeII codebook, etc.), a codebook parameter combination value (paramCombination-r16) (e.g., L, *β* , pv), a number of PMIs of each sub-band (numberOfPMI-SubbandsPerCQI-Subband, R), etc.

In some embodiments, a report for sending the information processing result is a first report, and the first report is a report including the information processing mode indication information. That is, the first node transmits the first report, and the first report carries the information processing result. Correspondingly, the second node receives the information processing result in the first report. Exemplarily, the first report is a channel state information (CSI) report.

In some embodiments, the report for sending the information processing report includes C1 reports, and sending the information processing result may be implemented as, for example: sending the information processing result in a report with a smallest report index among the C1 reports; or, sending the information processing result in a report with a smallest corresponding slot among the C1 reports; or, sending the information processing result in a report with a capacity that satisfies a requirement, among the C1 reports; or, sending the information processing result in a report with a smallest slot among the C1 reports; or, sending the information processing result in a report with a largest capacity among the C1 reports. Correspondingly, the second node receives the information processing result in the corresponding report. C1 is a positive integer.

### Exemplary scenario 1:

The second node sends reference signals in at least C0 slots; the first node receives the reference signals of the C0 slots and obtains channel information of the C0 slots. The first node may predict channel information of C2 slots after a reference slot, based on the channel information of the C0 slots. Exemplarily, the channel information may be a channel matrix, or a right singular vector corresponding to the channel matrix, or a codebook corresponding to the channel matrix.

Herein, the C0 slots may be continuous C0 slots or discontinuous C0 slots (e.g., equally spaced C0 slots). The C2 slots may be continuous C2 slots or discontinuous C2 slots (e.g., equally spaced C2 slots). C0 is an integer greater than 1, and C2 is a positive integer. C0 is greater than or equal to C2.

However, in some examples, due to collision of the reference signals sent by the second node or switching of a bandwidth part (BWP), etc., the reference signal cannot be sent on the corresponding slot, or the first node fails to successfully receive the reference signals of C0 slots and only receives reference signals of C slots, so that the first node can only acquire channel information of the C slots. C is a positive integer less than C0. It should be understood that, channel information of a slot is channel information corresponding to a reference signal of a slot.

In an example, the first node is indicated to report the predicted channel information of C2 slots, or channel state information corresponding to channel information of the C2 slots, by C1 CSI reports. In a case where the first node only acquires channel information of C slots, since C is less than C0, the first node does not perform an operation of predicting the channel information of future C2 slots from the channel information of C0 slots, and does not feed back channel information or channel state information by the C1 CSI reports.

In an example, the first node is indicated to report C2 pieces of predicted channel information in a transmission resource corresponding to C1 CSI reports, or the first node is indicated to report channel state information corresponding to C2 pieces of predicted channel information in a transmission resource corresponding to C1 CSI reports. Also, the first node finds that the current information processing mode is not applicable to time domain prediction for channel information. In this case, the first node does not perform an operation of predicting the channel information of the future C2 slots from the channel information of the C0 slots, and feeds back the information processing result (e.g., channel information or channel state information) by a CSI report among the C1 CSI reports. For example, the information processing result is sent in a report with a smallest index among the C1 reports; or, the information processing result is sent in a report with a smallest corresponding slot among the C1 reports; or, the information processing result is sent in a report with a capacity that satisfies a requirement, among the C1 reports; or, the information processing result is sent in a report with a smallest slot among the C1 reports; or, the information processing result is sent in a report with a largest capacity among the C1 reports.

In some examples, the first node can determine a new information processing mode applicable to the current scenario in a direct mode or an indirect mode, and the first node may also feed back the new information processing mode identifier while feeding back channel information or channel state information in the transmission resource.

### Exemplary scenario 2:

For example, the first node is indicated to report the predicted channel information of C2 slots or the predicted channel state information corresponding to the channel information of C2 slots, on a transmission resource corresponding to a CSI report. Also, when the first node finds that the current information processing mode is not applicable to time domain prediction for the channel information, in this case, the first node directly acquires the channel information according to a reference signal with a largest slot among C0 slots, processes the channel information based on the default information processing mode to obtain the channel state information, and feeds back the channel state information on a transmission resource corresponding to the CSI report.

Since a transmission resource corresponding to a CSI report is allocated according to a size of the fed back channel information or channel state information of C2 slots, for example, D bits, and in this case, only a piece of channel state information needs to be fed back, the channel state information may be generated according to a maximum feedback bit not exceeding D bits when the channel information is processed in the default information processing mode. For example, D1 bits of channel state information may be generated, where D1 is less than or equal to D, which may improve the feedback precision of the channel information. The channel state information parameter for generating D bits of channel state information may be determined by the first node, or obtained according to a received signaling of the channel state information parameter sent by the second node.

2. Send the information processing mode indication information based on a PUCCH.

As an implementation, the first node sends first request information on a PUCCH, and the first request information is associated with information processing mode indication information. Correspondingly, the second node receives the first request information on the PUCCH. In this way, the second node can know that the first node requests to update the information processing mode (or model), by the first request information.

As an example, the second node may determine that the information processing mode is a default information processing mode or a negotiated information processing mode, according to the first request information.

As an example, the second node, after receiving the first request information, sends PUCCH configuration information requested by the first request information; and correspondingly, the first node receives the PUCCH configuration information. The first node sends information processing mode indication information and/or an information processing result on a PUCCH corresponding to the PUCCH configuration information; and correspondingly, the second node receives the information processing mode indication information and/or the information processing result on the PUCCH corresponding to the PUCCH configuration information.

As an example, the second node, after receiving the first request information, sends PUSCH configuration information requested by the first request information; and correspondingly, the first node receives the PUSCH configuration information. The first node sends information processing mode indication information and/or an information processing result on a PUSCH corresponding to the PUSCH configuration information; and correspondingly, the second node receives the information processing mode indication information and/or information processing result on the PUSCH corresponding to the PUSCH configuration information.

As another implementation, the first node directly sends information processing mode indication information and/or an information processing result on the PUCCH; and correspondingly, the second node receives the information processing mode indication information and/or the information processing result on a PUCCH corresponding to PUCCH configuration information.

In some schemes, the information processing mode indication information sent based on the PUCCH is an information processing mode identifier.

3. Send the information processing mode indication information based on a PRACH.

As an implementation, the first node determines an association relationship between a preamble of a physical random access channel and the information processing mode indication information; the first node sends the information processing mode indication information according to the association relationship between a preamble sequence of the physical random access channel (PRACH) and the information processing mode indication information. Correspondingly, the second node receives the information processing mode indication information according to the association relationship between the preamble of the physical random access channel (PRACH) and the information processing mode indication information. As an example, this implementation may be applicable to non-contention PRACH.

In some embodiments, the preamble may also be referred to as a preamble sequence, a preamble code sequence, etc., which is not limited to the embodiments of the present disclosure.

In some embodiments, the association relationship between the preamble and the information processing mode indication information may be implemented as that: each preamble of N preambles corresponds to a piece of information processing mode indication information, and different preambles correspond to different information processing mode indication information. N is a positive integer.

Based on this, sending, by the first node, the information processing mode indication information according to the association relationship between the preamble of the physical random access channel and the information processing mode indication information, may be implemented as: determining, by the first node, a target preamble according to information processing mode indication information indicated by the information processing mode indication information, and the association relationship between the preamble and the information processing mode indication information; the first node sends the physical random access channel based on the target preamble.

Receiving, by the second node, the information processing mode indication information according to the association relationship between the preamble of the physical random access channel and the information processing mode indication information, may be implemented as: after the second node receives the physical random access channel, performing, by the second node, blind detection on the physical random access channel, to determine the target preamble used by the physical random access channel; determining, by the second node, the information processing mode indication information corresponding to the target preamble according to the association relationship between the preamble and the information processing mode indication information, that is, determining the information processing mode indication information.

As another implementation, the first node sends second request information (for example, one of a first message (Massage1), a third message (Massage3), and a type-A message (MassageA), etc.) on a PRACH, and the second request information is used to associate the information processing mode indication information. Correspondingly, the second node receives the second request information on the PRACH. In this way, the second node can know that the first node requests to update the information processing mode (or model), by the second request information. As an example, this implementation may be applicable to contention-based PRACH.

As an example, the second node may determine that the information processing mode is a default information processing mode or a negotiated information processing mode, according to the second request information.

As an example, the second node, after receiving the second request information, sends PUCCH configuration information requested by the second request information; and correspondingly, the first node receives the PUCCH configuration information. The first node sends information processing mode indication information and/or an information processing result on a PUCCH corresponding to the PUCCH configuration information; and correspondingly, the second node receives the information processing mode indication information and/or the information processing result on the PUCCH corresponding to the PUCCH configuration information.

As an example, the second node, after receiving the second request information, sends PUSCH configuration information requested by the second request information; and correspondingly, the first node receives the PUSCH configuration information. The first node sends information processing mode indication information and/or an information processing result on a PUSCH corresponding to the PUSCH configuration information; and correspondingly, the second node receives the information processing mode identifier and/or information processing result on the PUSCH corresponding to the PUSCH configuration information.

In some schemes, the information processing mode indication information sent based on the PRACH is an information processing mode identifier.

4. Send information processing mode indication information based on at least one of a scrambling sequence, a check code, and an interleaving sequence.

As an implementation, the first node determines an association relationship between a scrambling sequence and information processing mode indication information; the first node sends the information processing mode indication information according to the association relationship between the scrambling sequence and the information processing mode indication information. Correspondingly, a second node receives the information processing mode indication information according to the association relationship between the scrambling sequence and the information processing mode indication information.

In some embodiments, the association relationship between the scrambling sequence and the information processing mode indication information may be implemented as that: each scrambling sequence of N scrambling sequences corresponds to a piece of information processing mode indication information, and different scrambling sequences correspond to different information processing mode indication information. N is a positive integer.

Based on this, transmitting, by the first node, the information processing mode indication information according to the association relationship between the scrambling sequence and the information processing mode indication information may be implemented as: performing, by the first node, scrambling processing on a coding block for transmitting channel information, by using a scrambling sequence corresponding to the information processing mode indication information, and transmitting the scrambled coding block.

Receiving, by the second node, the information processing mode indication information according to the association relationship between the scrambling sequence and the information processing mode indication information, may be implemented as: after receiving the channel information, performing, by the second node, blind detection on the scrambling sequence of the coding block corresponding to the channel information, to determine the scrambling sequence used by the coding block; thereafter, the second node can determine the information processing mode indication information according to the scrambling sequence used by the coding block.

As another implementation, the first node determines an association relationship between the check code and the information processing mode indication information; the first node sends the information processing mode indication information according to the association relationship between the check code and the information processing mode indication information. Correspondingly, the second node receives the information processing mode indication information according to the association relationship between the check code and the information processing mode indication information.

In some embodiments, the association relationship between the check code and the information processing mode indication information may be implemented as that: each check code of N check codes corresponds to a piece of information processing mode indication information, and different check codes correspond to different information processing mode indication information. N is a positive integer.

Transmitting, by the first node, the information processing mode indication information according to the association relationship between the check code and the information processing mode indication information, may be implemented as: determining, by the first node, a target check code corresponding to the information processing mode indication information according to the association relationship between the check code and the information processing mode indication information; performing, by the first node, joint processing on a corresponding coding block for transmitting channel information, by using the target check code, and transmitting the processed coding block.

Receiving, by the second node, the information processing mode indication information according to the association relationship between the check code and the information processing mode indication information, may be implemented as: after receiving the channel information fed back by the first node, performing, by the second node, blind detection on the check code of the coding block corresponding to the channel information, to determine the target check code used by the coding block; determining, by the second node, the information processing mode indication information corresponding to the target check code according to the target check code, and the association relationship between the check code and the information processing mode indication information. It should be understood that, the information processing mode indication information corresponding to the target check code is the information processing mode indication information.

Exemplarily, the above-mentioned check code may be a cyclic redundancy check code (cyclic redundancy check, CRC).

As another implementation, the first node determines an association relationship between the interleaving sequence and the information processing mode indication information; and the first node sends the information processing mode indication information according to the association relationship between the interleaving sequence and the information processing mode indication information. Correspondingly, the second node receives the information processing mode indication information according to the association relationship between the interleaving sequence and the information processing mode indication information.

In some embodiments, the association relationship between the interleaving sequence and the information processing mode indication information may be implemented as that: each interleaving sequence of N interleaving sequences corresponds to a piece of information processing mode indication information, and different interleaving sequences correspond to different information processing mode indication information. N is a positive integer.

Transmitting, by the first node, the information processing mode indication information according to the association relationship between the interleaving sequence and the information processing mode indication information, may be implemented as: determining, by the first node, a target interleaving sequence corresponding to the information processing mode indication information according to the association relationship between the interleaving sequence and the information processing mode indication information; performing, by the first node, interleaving processing on a coding block corresponding to the channel information by using the target interleaving sequence, and transmitting the interleaved coding block.

Receiving, by the second node, the information processing mode indication information according to the association relationship between the interleaving sequence and the information processing mode indication information, may be implemented as that: after receiving the channel information fed back by the first node, performing, by the second node, blind detection on the coding block corresponding to the channel information, to determine the target interleaving sequence used by the coding block; determining, by the second node, the information processing mode indication information corresponding to the target interleaving sequence according to the target interleaving sequence, and the association relationship between the interleaving sequence and the information processing mode indication information. The information processing mode indication information corresponding to the target interleaving sequence is the information processing mode indication information.

In some schemes, the information processing mode indication information sent based on one of the scrambling sequence, the check code, the interleaving sequence, etc., is an information processing mode identifier.

Based on the embodiments shown in FIG. 2, in a case where the currently used information processing mode is not applicable to the current environment, the first node may send information processing mode indication information to the second node, to indicate to use a new information processing mode, thereby ensuring the information processing performance and further ensuring the transmission performance of the wireless communication system.

As shown in FIG. 3, the embodiments of the present disclosure further provide an indication information receiving method, the method is applied to a second node. The method includes the following content.

In S201, receive the information processing mode indication information.

The information processing mode indication information is used to indicate an information processing mode, and the information processing mode indication information includes first parameter information and/or an information processing mode identifier.

For the description of the first parameter information and the information processing mode identifier, reference may be made to the introduction of the relevant contents in the embodiments shown in FIG. 2 above, which will not be repeated herein.

In the embodiments of the present disclosure, in a case where the originally used information processing mode is not applicable to the current channel environment, the first node may send the information processing mode indication information to the second node, to indicate the second node to update to the information processing mode (or model) indicated by the information processing mode indication information of the first node, so as to ensure the processing performance of the channel information and further ensure the transmission performance of the wireless communication system.

In some embodiments, the second node, after receiving the information processing mode indication information, may send an information processing mode-enabled signaling to the first node. The first node receives the information processing mode-enabled signaling, and determines the information processing mode according to the information processing mode-enabled signaling.

As an example, the information processing mode-enabled signaling taking a fourth value, is used to determine the use of the information processing mode indicated by the information processing mode indication information; the information processing mode-enabled signaling taking a fifth value, is used to negate the use of the information processing mode indicated by the information processing mode indication information. As an example, in a case where the information processing mode-enabled signaling takes the fifth value, the information processing mode-enabled signaling is also used to indicate an information processing mode recommended by the second node.

Exemplarily, the information processing mode-enabled signaling may be implemented with 1 bit, and a value range of the information processing mode-enabled signaling is {0, 1} or {True, False} or {ACK, NACK}, so the information processing mode-enabled signaling may take the fourth value or the fifth value. The fourth value and the fifth value may be values different from each other in the value range of the information processing mode-enabled signaling.

As an example, if the information processing mode-enabled signaling takes the fourth value, the first node processes the information by using the information processing mode corresponding to the information processing mode identifier. If the information processing mode-enabled signaling takes the fifth value, the first node processes the information by using a default information processing mode, or processes the information by using an information processing mode recommended by the second node.

In some embodiments, the second node, after receiving the information processing mode indication information, may send a second report configuration signaling to the first node. The second report configuration signaling may be used to configure a second report, the second report includes the information processing mode indication information, e.g., the information processing mode identifier. Correspondingly, the first node receives the second report configuration signaling, and determines an information processing mode according to the second report configuration signaling.

As an example, if the second report configuration signaling includes a new information processing mode identifier, the first node processes the information by using an information processing mode corresponding to the new information processing mode identifier. If the second report configuration signaling does not include a new information processing mode identifier, the first node processes the channel information by using a default information processing mode.

In some embodiments, the second node, after receiving the information processing mode indication information, may send a first report deactivation instruction to the first node. Correspondingly, the first node may receive the first report deactivation instruction, and determine an information processing mode according to the first report deactivation instruction.

As an example, the first node, before receiving the first report deactivation instruction, processes the information by using a default information processing mode. The first node, after receiving the first report deactivation instruction, processes the channel information according to the information processing mode indicated by the information processing indication information.

In some embodiments, the first node may determine the information processing mode according to transmission time of the first report. For example, the first node processes, after the slot for sending the first report plus T slots, the information by using the information processing mode indicated by the information processing mode identifier, and within the slot for sending the first report plus T slots, the first node processes the channel information by using the default information processing mode.

In some embodiments, the first node may determine the information processing mode based on a value of the information processing mode identifier. As an example, in a case where the value of the information processing mode identifier is within a preset value range, the first node processes the channel information by using the information processing mode corresponding to the information processing mode identifier. In a case where the value of the information processing identifier is outside the preset value range, the first node processes the channel information by using the default information processing mode.

As an example, the preset value range may be a specific value, such as 0, a negative value, or a letter.

In some embodiments, the second node may also activate an information processing mode by a higher layer signaling and/or a physical layer signaling, and the first node processes the channel information according to the activated information processing mode. However, as the position of the first node changes (e.g., the first node moves or rotates), or the surrounding environment changes, the channel environment changes. The second node finds that the information processing mode needs to be updated, by the direct measurement or the indirect measurement. In an example, the second node sends indication information to the first node by a higher layer signaling and/or a physical layer signaling, and the indication information is used to indicate at least one new information processing mode identifier. In an example, the new information processing mode exists locally in the first node, and the first node may directly use the new information processing mode to process the channel information. In an example, the new information processing mode does not exist locally in the first node, and the first node downloads the new information processing mode from other devices (for example, the second node or a management server of the information processing mode). In the process of downloading the new information processing mode, the first node may use the default information processing mode to process the channel information. The first node, after successfully downloading the new information processing mode, may use the new information processing mode to process the channel information.

The above introduces the solutions provided by the present disclosure mainly from the perspective of interaction between various nodes. It can be understood that, in order to implement the above functions, the various nodes (e.g., the second node and the first node) contain corresponding hardware structures and/or software modules for performing various functions. Those skilled in the art should easily realize that the present disclosure can be implemented in the form of hardware or a combination of hardware and computer software, in combination with the algorithm steps of various examples described in the embodiments disclosed herein. Whether a certain function is performed by hardware or by computer software driving hardware, depends on the specific applications and design constraint conditions of the technical solution. Professional technicians may use different methods to implement the described functions, for each specific application, but this implementation should not be considered beyond the scope of the present disclosure.

FIG. 4 is a schematic diagram of components of a communication apparatus according to some embodiments. As shown in FIG. 4, the communication apparatus 40 includes an acquiring unit 401, a sending unit 402, and a processing unit 403.

The communication apparatus 40 may be the above-mentioned terminal or a chip in the terminal. When the communication apparatus 40 is configured to implement the functions of the terminal in the above embodiments, the respective units are configured to implement the following functions.

The acquiring unit 401 is configured to acquire information processing mode indication information, where the information processing mode indication information is used to indicate an information processing mode, where the information processing mode indication information includes first parameter information and/or an information processing mode identifier.

The sending unit 402 is configured to send the information processing mode indication information.

In some embodiments, a value of the first parameter information is used to determine whether the information processing mode indication information includes the information processing mode identifier.

In some embodiments, the first parameter information takes a first value, and the information processing mode indication information includes the first parameter information and the information processing mode identifier.

In some embodiments, the information processing mode indication information includes the information processing mode identifier, or the information processing mode indication information includes the first parameter information and the information processing identifier and the first parameter information takes a first value, and the information processing mode is a default information processing mode, or the information processing mode is an information processing mode indicated by the information processing mode identifier.

In some embodiments, the first parameter information takes the second value, and the information processing mode is a default information processing mode.

In some embodiments, the first parameter information takes the third value, and the information processing mode is a negotiated information processing mode.

In some embodiments, the information processing mode is determined according to relevant information of a first report, and the first report is a report including the information processing mode indication information.

In some embodiments, the relevant information of the first report is a number of bits of the first report, and the processing unit 403 is configured to: in response that the number of bits of the first report is greater than and/or equal to a number of bits corresponding to a first processing result, determine that the information processing mode is an information processing mode indicated by the information processing mode identifier; or in response that the number of bits of the first report is less than a number of bits corresponding to a second processing result, determine that the information processing mode is a default information processing mode; and the first processing result is an information processing result obtained by processing information according to the information processing mode indicated by the information processing mode identifier.

In some embodiments, the processing unit 403 is further configured to process information according to the information processing mode indicated by the information processing mode indication information, to obtain an information processing result.

The sending unit 402 is further configured to send the information processing result.

In some embodiments, the acquiring unit 401 is further configured to acquire C pieces of channel information of C slots, where C is a positive integer.

In some embodiments, the acquiring unit 401 is configured to acquire C0 pieces of channel information of C0 slots, and select the C pieces of channel information of the C slots with largest slot indexes among the C0 slots; where C0 is a positive integer greater than C; or, acquire C0 pieces of channel information of C0 slots, and select the C pieces of channel information of the C slots that are closest to a slot in which a report for sending the information processing result is located, among the C0 slots; the first report is a report including the information processing mode indication information.

In some embodiments, the processing unit 403 is configured to process the C pieces of channel information of the C slots according to a channel state information parameter that is obtained and a default information processing mode, to obtain the information processing result.

In some embodiments, the acquiring unit 401 is configured to: acquire the channel state information parameter according to a channel state information parameter configuration signaling that is received; or acquire the channel state information parameter according to a channel state information parameter determined by the first node.

In some embodiments, a report for sending the information processing result is a first report, and the first report is a report including the information processing mode indication information.

In some embodiments, a report for sending the information processing result includes C1 reports; the sending unit 402 is configured to send the information processing result in a report with a smallest report index or a report with a smallest corresponding transmission slot, among the C1 reports.

In some embodiments, the sending unit 402 is configured to send the information processing mode indication information based on a physical uplink control channel (PUCCH).

In some embodiments, the sending unit 402 is configured to send first request information on the PUCCH, where the first request information is used to associate the information processing mode indication information.

In some embodiments, the acquiring unit 401 is further configured to receive PUCCH configuration information requested by the first request information.

The sending unit 402 is further configured to send information processing mode indication information and/or an information processing result, in a PUCCH corresponding to the PUCCH configuration information.

In some embodiments, the sending unit 402 is configured to send the information processing mode indication information based on a physical random access channel (PRACH).

In some embodiments, the sending unit 402 is configured to: determine an association relationship between a preamble of the PRACH and the information processing mode indication information; and send the information processing mode indication information according to the association relationship between the preamble of the PRACH and the information processing mode indication information.

In some embodiments, the sending unit 402 is configured to send the information processing mode indication information based on at least one of a scrambling sequence, a check code, and an interleaving sequence.

In some embodiments, the sending unit 402 is configured to: determine an association relationship between the scrambling sequence and the information processing mode indication information, and send the information processing mode indication information according to the association relationship between the scrambling sequence and the information processing mode indication information; or determine an association relationship between the check code and the information processing mode indication information, and send the information processing mode indication information according to the association relationship between the check code and the information processing mode indication information; or determine an association relationship between the interleaving sequence and the information processing mode indication information, and send the information processing mode indication information according to the association relationship between the interleaving sequence and the information processing mode indication information.

In some embodiments, after the information processing mode indication information is sent, the processing unit 403 is configured to determine the information processing mode according to one of: determining the information processing mode according to an information processing mode enabling signaling that is received; or determining the information processing mode according to a second report configuration signaling that is received; or determining the information processing mode according to a first report deactivation signaling that is received; or determining the information processing mode according to transmission time information of a first report; or determining the information processing mode according to a value of the information processing mode identifier.

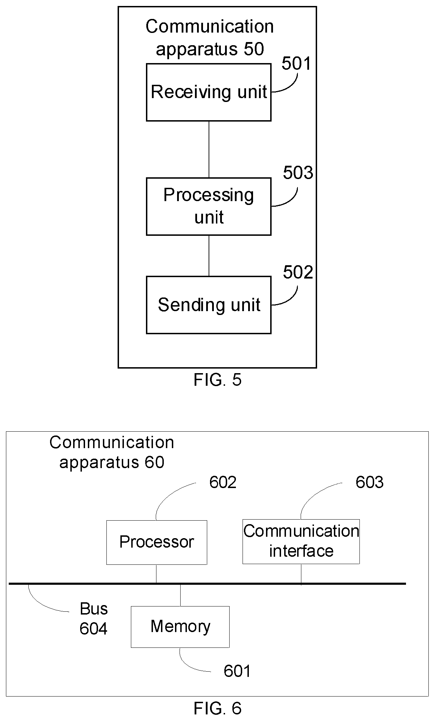

FIG. 5 is a schematic diagram of components of another communication apparatus according to some embodiments. As shown in FIG. 5, the communication apparatus 50 includes a receiving unit 501, a sending unit 502, and a processing unit 503.

The communication apparatus 50 may be the above-mentioned base station or a chip in the base station. When the communication apparatus 50 is configured to implement the functions of the base station in the above embodiments, the respective units are configured to implement the following functions.

The receiving unit 501 is configured to receive information processing mode indication information, where the information processing mode indication information is used to indicate an information processing mode, where the information processing mode indication information includes first parameter information and/or an information processing mode identifier.

In some embodiments, a value of the first parameter information is used to determine whether the information processing mode indication information includes the information processing mode identifier.

In some embodiments, the first parameter information takes a first value, and the information processing mode indication information includes the first parameter information and the information processing mode identifier.

In some embodiments, the first parameter information takes a second value or a third value, and the information processing mode indication information includes the first parameter information.

In some embodiments, the information processing mode indication information includes the information processing mode identifier, or the information processing mode indication information includes the first parameter information and the information processing identifier and the first parameter information takes a first value, and the information processing mode is a default information processing mode, or the information processing mode is an information processing mode indicated by the information processing mode identifier.

In some embodiments, the first parameter information takes the second value, and the information processing mode is a default information processing mode.

In some embodiments, the first parameter information takes the third value, and the information processing mode is a negotiated information processing mode.

In some embodiments, the information processing mode is determined according to relevant information of a first report, and the first report is a report including the information processing mode indication information.

In some embodiments, the relevant information of the first report is a number of bits of the first report, and the processing unit 503 is configured to: in response that the number of bits of the first report is greater than and/or equal to a number of bits corresponding to a first processing result, determine that the information processing mode is an information processing mode indicated by the information processing mode identifier; or in response that the number of bits of the first report is less than a number of bits corresponding to a second processing result, determine that the information processing mode is a default information processing mode; and the first processing result is an information processing result obtained by processing information according to the information processing mode indicated by the information processing mode identifier.

In some embodiments, the receiving unit 501 is further configured to receive an information processing result, where the information processing result is obtained by processing information according to the information processing mode indicated by the information processing mode indication information.

In some embodiments, the sending unit 502 is further configured to send reference signal resources on C0 slots respectively, where the reference signal resources respectively sent on the C0 slots are used by the first node to acquire C pieces of channel information of C slots.

In some embodiments, the C pieces of channel information of the C slots are C pieces of channel information of C slots with largest slot indexes among the C0 slots, and C0 is a positive integer greater than C; or the C pieces of channel information of the C slots are C pieces of channel information of C slots that are closest to a slot in which a report for sending the information processing result is located, among the C0 slots; and the first report is a report including the information processing mode indication information.

In some embodiments, the channel state information parameter is acquired according to one of: acquiring the channel state information parameter according to a channel state information parameter configuration signaling; or acquiring the channel state information parameter according to a channel state information parameter determined by the first node.

In some embodiments, the information processing result is obtained by processing the C pieces of channel information of the C slots according to the channel state information parameter and a default information processing mode.

In some embodiments, the receiving unit 501 is configured to receive the information processing result on a first report, and the first report is a report including the information processing mode indication information.

In some embodiments, the second node is configured with C1 reports for receiving the information processing result, and the receiving unit 501 is configured to receive the information processing result in a report with a smallest report index or a report with a smallest corresponding receiving slot, among the C1 reports.

In some embodiments, the receiving unit 501 is configured to receive the information processing mode indication information based on a PUCCH.

In some embodiments, the receiving unit 501 is configured to receive first request information on the PUCCH, and the first request information is used to associate the information processing mode indication information.

In some embodiments, the sending unit 502 is further configured to send PUCCH configuration information requested by the first request information.

The receiving unit 501 is further configured to receive the information processing mode identifier and/or the information processing result on a PUCCH corresponding to the PUCCH configuration information.

In some embodiments, the receiving unit 501 is configured to receive the information processing mode indication information based on a PRACH.

In some embodiments, the receiving unit 501 is configured to: determine an association relationship between a preamble of the PRACH and information processing mode indication information; and receive the information processing mode indication information according to the association relationship between the preamble of the PRACH and the information processing mode indication information.

In some embodiments, the receiving unit 501 is configured to receive the information processing mode indication information based on at least one of a scrambling sequence, a check code, and an interleaving sequence.

In some embodiments, the receiving unit 501 is configured to: determine an association relationship between the scrambling sequence and the information processing mode indication information, and receive the information processing mode indication information according to the association relationship between the scrambling sequence and the information processing mode indication information; or determine an association relationship between the check code and the information processing mode indication information, and receive the information processing mode indication information according to the association relationship between the check code and the information processing mode indication information; or determine an association relationship between the interleaving sequence and the information processing mode indication information, and receive the information processing mode indication information according to the association relationship between the interleaving sequence and the information processing mode indication information.

If the respective units in FIG. 4 and FIG. 5 are implemented in the form of a software functional module, and sold or used as an independent product, the respective units may be stored in a computer readable storage medium. Based on this understanding, the technical solutions of the embodiments of the present disclosure may be essentially, or a part of the technical solutions that contributes to the existing technology, or a part of all of the technical solutions, may be embodied in the form of a software product, and the computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium storing the computer software product includes various types of medium capable of storing program codes, such as a U disk (USB flash disk), a mobile hard disk, a read-only memory (ROM), a random access memory (RAM), a magnetic disk, or an optical disk, etc.

In a case where the functions of the above integrated modules are implemented in the form of hardware, the embodiments of the present disclosure provide a structural schematic diagram of a communication apparatus, the communication apparatus may be the above-mentioned communication apparatus 40 or communication apparatus 50. As shown in FIG. 6, the communication apparatus 60 includes a processor 602, a communication interface 603, and a bus 604. In some embodiments, the communication apparatus 60 may also include a memory 601.

The processor 602 may implement or perform various exemplary logical blocks, modules and circuits described in conjunction with the content disclosed in the present disclosure. The processor 602 may be a central processing unit, a general-purpose processor, a digital signal processor, an application specific integrated circuit, a field programmable gate array or other programmable logic devices, a transistor logic device, a hardware component or any combination thereof. The processor 602 may implement or perform various exemplary logical blocks, modules and circuits described in conjunction with the content disclosed in the present disclosure. The processor 602 may also be a combination that implements computing functions, for example, including a combination of one or more microprocessors, a combination of a digital signal processor (DSP) and a microprocessor, or the like.

The communication interface 603 is configured to connect with other devices via a communication network. The communication network may be an Ethernet, a radio access network, a wireless local area network (WLAN), or the like.

The memory 601 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 601 may exist independently of the processor 602, and the memory 601 may be connected to the processor 602 via the bus 604 and is used for storing instructions or program codes. The processor 602, when calling and executing the instructions or program codes stored in the memory 601, is capable of implementing the indication information sending method or the indication information receiving method provided in the embodiments of the present disclosure.

As another implementation, the memory 601 may also be integrated with the processor 602.

The bus 604 may be an extended industry standard architecture (EISA) bus or the like. Buses 604 may be divided into address buses, data buses, control buses, and the like. For the convenience of representation, only one thick line is used in FIG. 6 for representation, but it does not mean that there is only one bus or one type of bus.

From the description of the above implementations, those skilled in the art can clearly understand that, for convenience and brevity of description, only the division of the above-mentioned various models is illustrated by way of example, and in actual applications, the above-mentioned functions may be allocated to be completed by different models as needed. That is, an internal structure of the base station or the terminal is divided into different models to complete all or a part of the functions mentioned above.

The embodiments of the present disclosure further provide a computer readable storage medium. All or a part of the procedures in the method embodiments mentioned above may be completed by related hardware indicated by computer instructions. The program may be stored in above-mentioned computer readable storage medium. The program, when executed, may include procedures of the various method embodiments described above. The computer readable storage medium may be or a memory of any one of the aforementioned embodiments. The above-mentioned computer readable storage medium may also be an external storage device of the above-mentioned base station or terminal, such as a plug-in hard disk, a smart memory card (smart media card, SMC), a secure digital (SD) card, a flash card, etc., equipped on the above-mentioned base station or terminal. Furthermore, the above-mentioned computer readable storage medium may include both an internal storage unit and an external storage device of the above-mentioned base station or terminal. The above-mentioned computer readable storage medium is used to store the above-mentioned computer program and other programs and data required for the above-mentioned base station or terminal. The above-mentioned computer readable storage medium may also be used to temporarily store data that has been output or is to be output. The readable storage medium includes a non-transitory computer readable storage medium.

The embodiments of the present disclosure provide a computer program product, the computer product contains a computer program, the computer program product, when executed on a computer, causes the computer to perform any one of the indication information sending method and the indication information receiving method provided in the above embodiments.

Although the present disclosure is described herein in conjunction with various embodiments, other variations of the disclosed embodiments may be understood and implemented by those skilled in the art by viewing the drawings, the disclosed content, and the appended claims, during implementing the claimed present disclosure. In the claims, the word "include/includes/including" does not exclude other components or steps, and "a/an" or "one" does not exclude multiple cases. A single processor or other unit may implement several functions listed in the claims. A fact that some measures are documented in dependent claims different from each other does not mean that these measures cannot be combined to exert a good effect.

Although the present disclosure is described in conjunction with the features and embodiments thereof, it is apparent that various modifications and combinations may be made thereto without departing from the spirit and scope of the present disclosure. Correspondingly, the specification and drawings herein are merely exemplary illustrations of the present disclosure as defined by the appended claims and are deemed to cover any and all modifications, variations, combinations or equivalents within the scope of the present disclosure. Obviously, those skilled in the art may make various modifications and variants to the present disclosure without departing from the spirit and scope of the present disclosure. In this way, if these modifications and variants of the present disclosure fall within the scope of the claims of the present disclosure and their equivalent technologies, the present disclosure is also intended to contain these modifications and variants.

The above descriptions are only specific implementations of the present disclosure, but the protection scope of the present disclosure is not limited thereto, any variations or replacements within the technical scope disclosed in the present disclosure shall be included in the protection scope of the present disclosure. Therefore, the protection scope of the present disclosure should be determined based on the protection scope of claims.

## Claims

1. An indication information sending method, **characterized in that** the method is applied to a first node, and comprises:
acquiring information processing mode indication information, wherein the information processing mode indication information is used to indicate an information processing mode, wherein the information processing mode indication information comprises first parameter information and/or an information processing mode identifier; and
sending the information processing mode indication information.

2. The method according to claim 1, wherein a value of the first parameter information is used to determine whether the information processing mode indication information comprises the information processing mode identifier.

3. The method according to claim 2, wherein the first parameter information takes a first value, and the information processing mode indication information comprises the first parameter information and the information processing mode identifier.

4. The method according to claim 2, wherein the first parameter information takes a second value or a third value, and the information processing mode indication information comprises the first parameter information.

5. The method according to claim 1, wherein the information processing mode indication information comprises the information processing mode identifier, or the information processing mode indication information comprises the first parameter information and the information processing identifier and the first parameter information takes a first value, and the information processing mode is a default information processing mode, or the information processing mode is an information processing mode indicated by the information processing mode identifier.

6. The method according to claim 4, wherein the first parameter information takes the second value, and the information processing mode is a default information processing mode.

7. The method according to claim 4, wherein the first parameter information takes the third value, and the information processing mode is a negotiated information processing mode.

8. The method according to claim 5, wherein the information processing mode is determined according to relevant information of a first report, and the first report is a report comprising the information processing mode indication information.

9. The method according to claim 8, wherein the relevant information of the first report is a number of bits of the first report, and determining the information processing mode according to the relevant information of the first report comprises:
in response that the number of bits of the first report is greater than or equal to a number of bits corresponding to a first processing result, determining that the information processing mode is an information processing mode indicated by the information processing mode identifier; or
in response that the number of bits of the first report is less than a number of bits corresponding to a first processing result, determining that the information processing mode is a default information processing mode;
wherein the first processing result is an information processing result obtained by processing information according to the information processing mode indicated by the information processing mode identifier.

10. The method according to claim 1, further comprising:
processing information according to the information processing mode indicated by the information processing mode indication information, to obtain an information processing result; and
sending the information processing result.

11. The method according to claim 10, wherein before processing the information according to the information processing mode indicated by the information processing mode indication information, to obtain the information processing result, the method further comprises:
acquiring C pieces of channel information of C slots, wherein C is a positive integer.

12. The method according to claim 11, wherein acquiring the C pieces of channel information of the C slots, comprises:
acquiring C0 pieces of channel information of C0 slots, and selecting the C pieces of channel information of the C slots with largest slot indexes among the C0 slots; wherein C0 is a positive integer greater than C; or
acquiring C0 pieces of channel information of C0 slots, and selecting the C pieces of channel information of the C slots that are closest to a slot in which a report for sending the information processing result is located, among the C0 slots.

13. The method according to claim 11, wherein processing the information according to the information processing mode indicated by the information processing mode indication information, to obtain the information processing result, comprises:
processing the C pieces of channel information according to a channel state information parameter that is obtained and a default information processing mode, to obtain the information processing result.

14. The method according to claim 13, wherein the channel state information parameter is acquired according to one of:
acquiring the channel state information parameter according to a channel state information parameter configuration signaling that is received; or
acquiring the channel state information parameter according to a channel state information parameter determined by the first node.

15. The method according to claim 11, wherein a report for sending the information processing result is a first report, and the first report is a report comprising the information processing mode indication information.

16. The method according to claim 11, wherein a report for sending the information processing result comprises C1 reports;
sending the information processing result, comprises:
sending the information processing result in a report with a smallest report index or a report with a smallest corresponding transmission slot, among the C1 reports.

17. The method according to claim 1, wherein sending the information processing mode indication information, comprises:
sending the information processing mode indication information based on a physical uplink control channel (PUCCH).

18. The method according to claim 17, wherein sending the information processing mode indication information based on the PUCCH, comprises:
sending first request information on the PUCCH, wherein the first request information is used to associate the information processing mode indication information.

19. The method according to claim 18, wherein after sending the first request information based on the PUCCH, the method further comprises:
receiving PUCCH configuration information requested by the first request information; and
sending information processing mode indication information and/or an information processing result, in a PUCCH corresponding to the PUCCH configuration information.

20. The method according to claim 1, wherein sending the information processing mode indication information, comprises:
sending the information processing mode indication information based on a physical random access channel (PRACH).

21. The method according to claim 20, wherein sending the information processing mode indication information based on the PRACH, comprises:
determining an association relationship between a preamble of the PRACH and the information processing mode indication information; and
sending the information processing mode indication information according to the association relationship between the preamble of the PRACH and the information processing mode indication information.

22. The method according to claim 1, wherein sending the information processing mode indication information, comprises:
sending the information processing mode indication information based on at least one of a scrambling sequence, a check code, and an interleaving sequence.

23. The method according to claim 22, wherein sending the information processing mode indication information based on at least one of the scrambling sequence, the check code, the interleaving sequence, comprises:
determining an association relationship between the scrambling sequence and the information processing mode indication information; sending the information processing mode indication information according to the association relationship between the scrambling sequence and the information processing mode indication information; or
determining an association relationship between the check code and the information processing mode indication information; sending the information processing mode indication information according to the association relationship between the check code and the information processing mode indication information; or
determining an association relationship between the interleaving sequence and the information processing mode indication information; sending the information processing mode indication information according to the association relationship between the interleaving sequence and the information processing mode indication information.

24. The method according to claim 1 or 8, wherein after sending the information processing mode indication information, the information processing mode is determined according to one of:
determining the information processing mode according to an information processing mode enabling signaling that is received; or
determining the information processing mode according to a second report configuration signaling that is received; or
determining the information processing mode according to a first report deactivation signaling that is received; or
determining the information processing mode according to transmission time information of a first report; or
determining the information processing mode according to a value of the information processing mode identifier.

25. An indication information receiving method, **characterized in that** the method is applied to a second node, and comprises:
receiving information processing mode indication information, wherein the information processing mode indication information is used to indicate an information processing mode, wherein the information processing mode indication information comprises first parameter information and/or an information processing mode identifier.

26. A communication apparatus, **characterized by** comprising: a processor and a memory;
the memory has stored instructions executable by the processor;
the processor is configured to execute the instructions, so that the communication apparatus implements the method according to any one of claims 1 to 25.

27. A computer readable storage medium, **characterized in that** the computer readable storage medium comprises computer instructions, and the computer instructions, when executed on a computer, cause the computer to perform the method according to any one of claims 1 to 25.
